# EUROPÄISCHE PATENTANMELDUNG

(11) **EP 1 286 039 A2**
(43) Veröffentlichungstag der Anmeldung: **26.02.2003**
(21) Anmeldenummer: 02018851.2
(22) Anmeldetag: 23.08.2002
(51) Int. Cl.: F02K 9/82

(54) **Raketenantrieb mit Zusatzstoffeinleitung**

(30) Priorität: 23.08.2001 DE 10141401
(71) Anmelder: Weinhold, Michael, 41462 Neuss (DE)
(72) Erfinder: Weinhold, Michael, 41462 Neuss (DE)
(74) Vertreter: Paul, Dieter-Alfred, Dipl.-Ing.

(57) **Zusammenfassung**

Die Erfindung bezieht sich auf ein Verfahren zur Erhöhung der Schubkraft von Raketenantrieben mit einer Zersetzung/Verbrennung eines Treibstoffes und einem daraus resultierenden gerichteten Abgasstrahl, welches dadurch gekennzeichnet ist, daß ein Zusatzstoff in den Abgasstrahl geleitet wird.

Die Erfindung betrifft ferner einen Raketenantrieb zur Durchführung dieses Verfahrens.

## Beschreibung

Die Erfindung betrifft ein Verfahren zur Erhöhung der Schubkraft von Raketenantrieben mit einer Zersetzung/Verbrennung eines Treibstoffes und einem daraus resultierenden gerichteten Abgasstrahl sowie einen Raketenantrieb zur Durchführung des Verfahrens mit einer Zufuhreinrichtung für den Treibstoff zu einer Zersetzungs- bzw. Brennkammer und einer stromabwärtig angeordneten Abgasstrahldüse.

Raketenantriebe sind in unterschiedlicher Ausgestaltung bekannt. Die Antriebskraft von Raketenantrieben beruht auf dem physikalischen Prinzip von Wirkung und Gegenwirkung. Der gerichtete Abgasstrahl eines Raketenantriebs sorgt für eine entgegengesetzt wirkende Schubkraft. Als Energieträger für den Raketenantrieb sind verschiedene Treibstoffe bekannt. Neben Feststoffen werden häufig flüssige Treibstoffe verwendet. Beispielsweise wird für die Verbrennung von Treibstoffen sowohl ein flüssiger Brennstoff wie auch flüssiger Sauerstoff oder ein Sauerstoffträger von getrennten Behältern über eine Fördereinrichtung einer Brennkammer mit stromabwärtig nachgeschalteter Abgasstrahldüse zugeführt. Durch die Verbrennung in der Brennkammer werden Abgasteilchen mit hoher Geschwindigkeit gerichtet über die Abgasstrahldüse abgestoßen. Beispielhaft ist in dem DE 42 40 962 C 1 ein Raketenantrieb mit katalytischer Zersetzung des Treibstoffs beschrieben.

Verschiedenste Verbindungen sind als Raketentreibstoffe ausprobiert worden. Dabei bestimmt der Energiegehalt des im Raketenantrieb verwendeten Treibstoffs, beispielsweise Brennstoff-Sauerstoffträger-Gemisch, die Austrittsgeschwindigkeit der Abgase und über deren Impuls p = m · v die Schubkraft des Raketenantriebs. Bei vorgegebener Treibstoffart und -menge ist eine Steigerung der Schubkraft des Triebwerks nur schwerlich möglich.

Gleichwohl ist es Aufgabe der Erfindung die Schubkraft von derartigen Raketenantrieben zu erhöhen.

Gelöst wird diese Aufgabe mit einem Verfahren gemäß Anspruch 1 bzw. mit einem Rakentenantrieb gemäß Anspruch 4.

Der vorliegenden Erfindung liegt die Überlegung zu Grunde, daß neben der Erhöhung der Austrittsgeschwindigkeit der Abgase auch eine Erhöhung des Massenstroms in den Abgasen zu einer Schubkrafterhöhung bei einem Raketenantrieb führen muß. Da die Austrittsgeschwindigkeit der Abgase nur über den Energiegehalt des Treibstoffgemisches zu beeinflussen ist, wird nach der erfindungsgemäßen Lehre die vom Raketenantrieb im Abgasstrahl ausgestoßene Masse erhöht. Dabei wird der thermische Überschuß, der bei der Verbrennung / Zersetzung des Treibstoffs in der Brennkammer entsteht und in Form von dissipativer Energie in angrenzende Bauteile geleitet wird, für die Mitbeschleunigung der Teilchen des Zusatzstoffs verwendet. Der Zusatzstoff wird in einem weiteren Behälter (Tank) in der Rakete mitgeführt. Über Förderleitungen und einer Fördervorrichtung (Pumpe) wird der Zusatzstoff in den Abgasstrahl geleitet.

Wenn der Zusatzstoff vor der Einleitung in den Abgasstrahl erhitzt wird, wird das thermische Gefälle zwischen Zusatzstoff und Abgas verringert. Bevorzugt wird der Zusatzstoff vor Einleitung in den Abgasstrahl bis zur Verdampfung erhitzt. Damit wird auch die Verdampfungswärme dem Zusatzstoff bereits vor Einleitung in den Abgasstrahl zugeführt. Ferner kann eine gleichmäßige Verteilung des Zusatzstoff im Abgas erreicht werden. Bevorzugt sind zur Einleitung des Zusatzstoffes in die Abgasstrahldüse gerichtete Zufuhrdüsen vorgesehen.

Zur Ausnutzung des thermischen Überschusses im Raketenantrieb ist zwischen Behälter und Zufuhrdüsen ein Wärmetauscher zum Erhitzen des Zusatzstoffes angeordnet. Somit kann der Zusatzstoff selbst als Kühlmittel für wärmeempfindliche Bauteile des Raketenantriebs fungieren. Es können auch mehrere Wärmewandler an verschiedenen wärmeempfindlichen Bauteilen vorgesehen werden, in denen der Zuatzstoff bis zur Verdampfung erhitzt wird.

Als Fördervorrichtung für einen flüssigen Zusatzstoff eignet sich eine Hochdruckpumpe. Bevorzugt wird diese Hochdruckpumpe von Antriebsmitteln der Zufuhreinrichtung für den Treibstoff mitangetrieben, womit keine zusätzlichen Antriebsmittel vorzusehen sind.

Alternativ kann für die Förderung des Zusatzstoffes auch ein von der Brennkammer abgezweigter, in den Behälter des Zusatzstoffes geleiteter Abgasstrahl verwendet werden.

Zur bedarfsweisen Steuerung der Einleitung des Zusatzstoffes sind Ventile in den Förderleitungen für den Zusatzstoff sowie eine Steuereinheit mit Wirkverbindungen zu den Ventilen und bevorzugt zur Fördervorrichtung vorgesehen.

In weiterer Ausgestaltung ist vorgesehen, daß im Bereich der Abgasstrahldüse eine Barrierekammer ausgebildet ist, in die der Zusatzstoff über die Zufuhrdüsen eingeleitet wird. Damit ist ein definierter Raum vorgesehen, in dem der in den Abgasstrahl eingeleitete Zusatzstoff expandiert und beschleunigt werden kann. Der Zusatzstoff ist eine nicht brennbare Flüssigkeit. Bevorzugt ist Wasser zu verwenden.

Nachfolgend werden zwei Ausführungsbeispiele der Erfindung anhand der beiliegenden Zeichnungen detalliert beschrieben.

Darin zeigt:
- Fig. 1: in schematischer Ansicht einen Raketenantrieb mit Zusatzstoffeinleitung und
- Fig. 2: ein Raketentandemantrieb mit Zusatzstoffeinleitung.

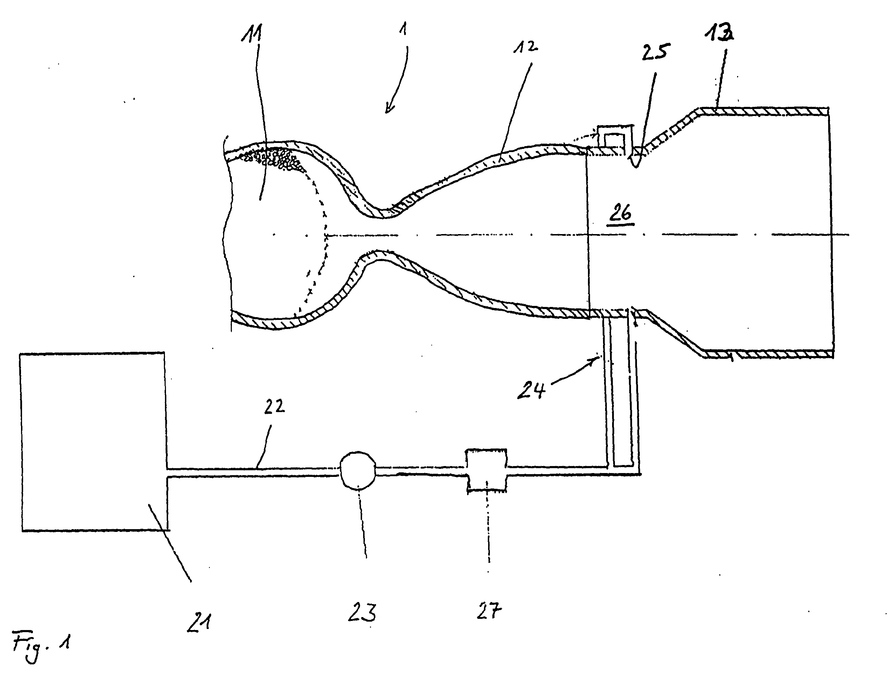

In Figur 1 ist schematisch ein Aufbau eines erfindungsgemäßen Raketenantriebs mit Zusatzstoffeinleitung 2 dargestellt. Von einem herkömmlichen Raketenantrieb 1 ist lediglich ein Brennraum 11 sowie eine Abgasstrahldüse 12 angedeutet.

Zur Einleitung eines Zusatzstoffes 20 in den Abgasstrahl ist neben den nicht dargestellten Treibstoffvorratsbehältern inklusiv zugehörigen Fördermitteln ein Behälter 21 zur Bevorratung des Zusatzstoffes 20 vorgesehen. Vom Behälter 21 führt eine Förderleitung 22 zur Abgasstrahldüse 12. In der Förderleitung 22 ist eine Hochdruckpumpe 23 zum Fördern des Zusatzstoffes 20 vom Behälter 21 zur Abgasstrahldüse 12 vorgesehen. Ferner ist in der Förderleitung 22 ein Wärmetauscher 24 zum Erhitzen des Zusatzstoffes 20 angeordnet.

Die Förderleitung 22 ist zur gleichmäßigeren Verteilung des Zusatzstoffes 20 vor der Abgasstrahldüse 12 aufgefächert, wobei jeder Teilstrang der Förderleitung 22 mit Zufuhrdüse 25 in den Abgasstrahl zeigend etwa in der Mitte der Längserstreckung der Abgasstrahldüse 12 angeordnet wird. Die aufgefächerten Stränge der Förderleitung 22 bilden gleichzeitig den Wärmetauscher 24, um den in der Förderleitung 22 geförderten Zusatzstoff 20 mit dem thermischen Überschuss des Raketenantriebs zu erhitzen.

Im Bereich der Zufuhrdüsen 25 innerhalb der Abgasstrahldüse 12 ist eine Barrierekammer 26 aufgespannt, in der sich die durch den Zusatzstoff zugeführte Masse ausdehnt und beschleunigt wird. Der stromabwärtig nachfolgende Bereich der Abgasstrahldüse 12 ist als Endstück 13 wiederum konisch erweitert.

Ferner ist eine Steuereinheit 27 vorgesehen, die die Förderung des Zusatzstoffes 20, beispielsweise über nicht dargestellte Ventile oder Ansteuerung der Hochdruckpumpe 23 steuert.

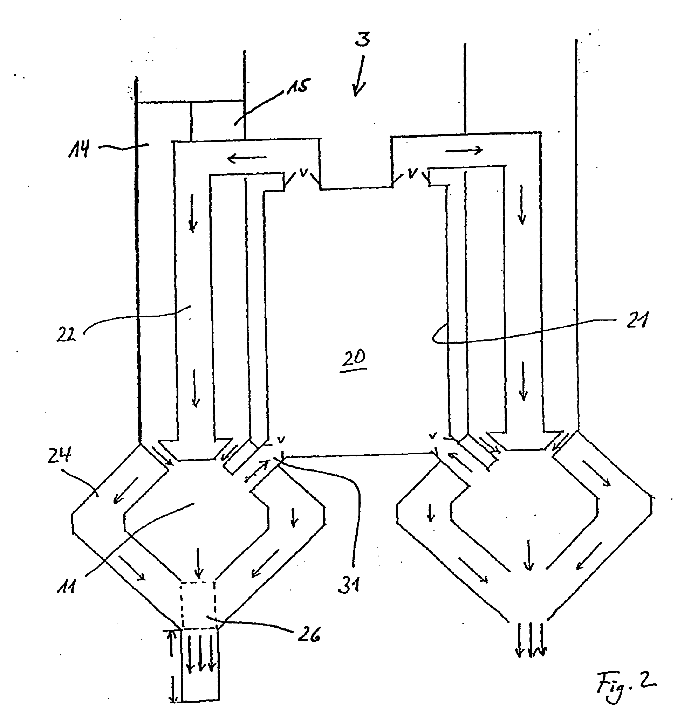

In Figur 2 ist ein Tandemraketenantrieb mit einem alternativen System 3 zur Einleitung eines Zusatzstoffes schematisch dargestellt. Zum vorgenannten Ausführungsbeispiel funktionsgleiche Bauteile weisen gleiche Bezugszeichen auf.

Die beiden dargestellten Raketenantriebe weisen einen Brennstofftank 14 und einen Sauerstofftank 15 auf. Brennstoff und Sauerstoff werden in einer Brennkammer 11 zur Verbrennung zusammengeführt. Von der Brennkammer 11 wird ein Teil des Abgasstromes über eine Druckleitung 31 in einen Behälter 21 für den Zusatzstoff 20 geleitet. Im dargestellten Ausführungsbeispiel ist beiden Raketenantrieben ein gemeinsamer Zusatzstofftank 21 zugeordnet.

Von diesem Behälter 21 führt je eine Förderleitung 22 zum jeweiligen Abgasstrahl. Im Bereich der Brennkammer 11 ist die Förderleitung 22 in mehrere Leitungen aufgefächert, die die Brennkammer umgeben. Diese Leitungen bilden einen Wärmetauscher 24, der von der Brennkammer nach außen abgegebene Wärmeenergie zum Erhitzen des Zusatzstoffes ausnutzt.

Der somit erhitzte Zusatzstoff 20 wird dann über nicht weiter dargestellte Zufuhrdüsen 25 in eine Barrierekammer 26 im Bereich der Abgasstrahldüse 12 in den Abgasstrahl eingeleitet.

In der Druckleitung 31 sowie in der Förderleitung 22 sind jeweils Ventile 32 zur Steuerung der Zusatzstoffeinleitung angeordnet. Die Ventile 32 werden über eine in Fig. 2 nicht dargestellte Steuereinheit 27 angesteuert.

Nachfolgend wird die Arbeitsweise des erfindungsgemäßen Raketenantriebs unter Bezugnahme auf die Figuren erläutert.

Bei einem herkömmlich aufgebauten Raketenantrieb wird im Bereich der Abgasstrahldüse ein nicht brennbarer Zusatzstoff, bevorzugt Wasser dem Abgasstrahl zugeführt. Über die als Wärmetauscher ausgebildete, aufgefächerte Förderleitung, die den thermischen Überschuss des herkömmlichen Raketenantriebs, insbesondere im Umgebungsbereich der Brennkammer, aufnimmt und an den Zusatzstoff abgibt wird der Zusatzstoff erhitzt. Der Zusatzstoff wird dabei bevorzugt verdampft.

Entsprechend wird der gasförmige Zusatzstoff (Wasserdampf) über die Zufuhrdüsen in den sogenannten Barriereraum innerhalb der Abgasstrahldüse eingeleitet.

Der gasförmige Zusatzstoff wird schnell im heißen Abgasstrahl vermischt und aufgenommen, wobei sich der Zusatzstoff weiter ausdehnt und die Teilchen beschleunigt werden. Entsprechend erhöht die zugeführte Masse des Zusatzstoffes die' Schubkraft des Raketenantriebs, ohne das der Treibstoffverbrauch oder der Energiegehalt des Treibstoffs erhöht werden muß. Die zusätzliche Schubkraft wird dabei vor allem aus der besseren Energieausnutzung des Treibstoffes durch gezielte Ausnutzung von bei bisherigen Raketenantrieben dissipativ abgegebener Wärmeenergie.

## Patentansprüche

1. Verfahren zur Erhöhung der Schubkraft von Raketenantrieben mit einer Zersetzung/Verbrennung eines Treibstoffes und einem daraus resultierenden gerichteten Abgasstrahl, **dadurch gekennzeichnet, daß** ein Zusatzstoff in den Abgasstrahl geleitet wird.

2. Verfahren nach Anspruch 1, **dadurch gekennzeichnet, daß** der Zusatzstoff vor der Einleitung in den Abgasstrahl erhitzt wird.

3. Verfahren nach Anspruch 2, **dadurch gekennzeichnet, daß** der Zusatzstoff vor Einleitung in den Abgasstrahl bis zur Verdampfung erhitzt wird.

4. Raketenantrieb zur Durchführung des Verfahrens nach Anspruch 1, 2 oder 3 mit einer Zufuhreinrichtung für den Treibstoff zu einer Zersetzungs- bzw. Brennkammer (11) und einer stromabwärtig angeordneten Abgasstrahldüse (12), **dadurch gekennzeichnet, daß** ein Behälter (21) für einen Zusatzstoff (20) mit Förderleitungen (22) und einer Fördervorrichtung (23) zur Abgasstrahldüse (12) vorgesehen ist.

5. Raketenantrieb nach Anspruch 4, **dadurch gekennzeichnet, daß** zur Einleitung des Zusatzstoffes (20) in die Abgasstrahldüse (12) gerichtete Zufuhrdüsen (25) vorgesehen sind.

6. Raketenantrieb nach Anspruch 5, **dadurch gekennzeichnet, daß** zwischen Behälter (21) und Zufuhrdüsen (25) ein Wärmetauscher (24) zum Erhitzen des Zusatzstoffes (20) angeordnet ist.

7. Raketenantrieb nach Anspruch 4, 5 oder 6, **dadurch gekennzeichnet, daß** die Fördervorrichtung eine Hochdruckpumpe (23) ist, die bevorzugt von Antriebsmitteln der Zufuhreinrichtung für den Treibstoff mitangetrieben wird.

8. Raketenantrieb nach Anspruch 4, 5 oder 6, **dadurch gekennzeichnet, daß** die Fördervorrichtung (23) aus einem von der Brennkammer (11) abgezweigten, in den Behälter (21) geleiteten Abgasstrahl gebildet ist.

9. Raketenantrieb nach einem der Ansprüche 4 bis 8, **dadurch gekennzeichnet, daß** Ventile (32) in den Förderleitungen (22) für den Zusatzstoff (20) sowie eine Steuereinheit (27) mit Wirkverbindungen zu den Ventilen (32) und bevorzugt zur Fördervorrichtung (23) vorgesehen sind.

10. Raketenantrieb nach einem der Ansprüche 4 bis 9, **dadurch gekennzeichnet, daß** im Bereich der Abgasstrahldüse (12) eine Barrierekammer (26) ausgebildet ist, in die der Zusatzstoff (20) über die Zufuhrdüsen (25) eingeleitet wird.

11. Raketenantrieb nach einem der Ansprüche 4 bis 10, **dadurch gekennzeichnet, daß** der Zusatzstoff (20) eine nicht brennbare Flüssigkeit, insbesondere Wasser ist.
